Europäisches Patentamt

European Patent Office

Office européen des brevets

(19)

(11) Numéro de publication: **0 234 164 B1**

## (12) FASCICULE DE BREVET EUROPEEN

(45) Date de publication de fascicule du brevet: **02.12.92**

(51) Int. Cl.⁵: **G01S 17/88**, G01S 7/48

(21) Numéro de dépôt: **86402969.9**

(22) Date de dépôt: **31.12.86**

Le dossier contient des informations techniques présentées postérieurement au dépôt de la demande et ne figurant pas dans le présent fascicule.

(54) **Station et système utilisant la rétrodiffusion de rayons laser pour détecter et localiser un objet ou une substance telle que la fumée d'incendie.**

(30) Priorité: **31.12.85 FR 8519508**

(43) Date de publication de la demande:
**02.09.87 Bulletin 87/36**

(45) Mention de la délivrance du brevet:
**02.12.92 Bulletin 92/49**

(84) Etats contractants désignés:
**AT BE CH DE ES GB GR IT LI LU NL SE**

(56) Documents cités:
FR-A- 2 392 398     FR-A- 2 394 817
GB-A- 2 075 787     US-A- 3 129 426
US-A- 3 601 488     US-A- 3 856 402
US-A- 4 199 226     US-A- 4 221 463
US-A- 4 384 198

ELECTRONICS & COMMUNICATIONS IN JA-PAN, vol. 64-C, no. 7, juillet 1981, pages 117-126, Scripta Publishing Co., Silver Spring, Maryland, US; H. KIMURA et al.: "Automatic laser radar systems for measu-rement of atmospheric pollutants"

(73) Titulaire: **Brown de Colstoun, François Patri-ce Didier**
**3 rue Joseph Bernard**
**F-92100 Boulogne-Billancourt(FR)**

Titulaire: **Chambaret, Jean-Paul**
**161, avenue Paul-Vaillant Couturier**
**F-94250 Gentilly(FR)**

Titulaire: **Chambaret, Yves**
**77, avenue Parmentier**
**F-75011 Paris(FR)**

Titulaire: **Le Saige de la Villesbrunne, Arnaud Gérard**
**4, Boulevard du Roi**
**F-78000 Versailles(FR)**

Titulaire: **Moscovici, Jean-Claude Marian**
**9 rue Marbeau**
**F-75116 Paris(FR)**

EP 0 234 164 B1

M. ROSS: "Laser applications", vol. 2, 1974, pages 2-48, Academic Press, New York, US

(72) Inventeur: **Brown de Colstoun, François Patrice Didier**
**3 rue Joseph Bernard**
**F-92100 Boulogne-Billancourt(FR)**
Inventeur: **Chambaret, Jean-Paul**
**161, avenue Paul-Vaillant Couturier**
**F-94250 Gentilly(FR)**
Inventeur: **Chambaret, Yves**
**77, avenue Parmentier**
**F-75011 Paris(FR)**
Inventeur: **Le Saige de la Villesbrunne, Arnaud Gérard**
**4, Boulevard du Roi**
**F-78000 Versailles(FR)**
Inventeur: **Moscovici, Jean-Claude Marian**
**9 rue Marbeau**
**F-75116 Paris(FR)**


(74) Mandataire: **Beauchamps, Georges et al**
**Cabinet Z.Weinstein 20, avenue de Friedland**
**F-75008 Paris(FR)**

## Description

L'invention concerne une station pour la détection par des rayons laser, d'une substance susceptible de rétro-diffuser au moins une partie de rayons laser incidents, du type décrit dans le préambule de la revendication principale.

Une station de ce type est connue par le brevet US N° 4 221 463. Cette station connue a pour but de détecter des turbulences d'air dans une direction de détection donnée. A cette fin le sytème est basé sur l'utilisation de l'effet doppler dû au mouvement des turbulences d'air. Le faisceau de détection est un faisceau laser continu et la longueur d'ondes du rayonnement est de 10.6 $\mu$m.

Une telle station ne peut pas être utilisée pour la détection et la localisation de fumées, notamment celles produites par des feux de forêts. En effet, le rayonnement laser utilisé dans la station connue ne permet pas la détection des fumées d'un feu, étant donné que la longueur d'ondes est trop grande. L'émission d'un faisceau continu exclut la possibilité d'une télémétrie, c'est-à-dire la détermination de la distance de l'obstacle. Enfin, l'absence dans le système connu de moyens prenant en compte les conditions atmosphériques exclut l'utilisation de la station pour la détection et la localisation de fumée de feux de forêts, dans la mesure ou des variations des conditions atmosphériques peuvent être importantes, ce qui entraîne des variations également importantes de la puissance des rayons laser rétro-diffusés par un obstacle. Ainsi la station connue ne permet pas d'assurer une détection et localisation à tout moment fiable de feux de forêts. Or, ceci est un inconvénient majeur dans la mesure où tout défaut de détection ou retard dans la détection d'un feu de forêt peut avoir des conséquences catastrophques.

La présente invention a pour but de réaliser, à partir de la station connue par le brevet US, une station qui permet de détecter et de localiser notamment des fumées d'incendie de forêt dans une zone géographique pouvant avoir une étendue importante telle qu'une zone d'un rayon de 20 kilomètres autour de la station.

L'invention permet d'atteindre ce but, grâce aux caractéristiques qui sont énoncées dans la partie caractérisante de la revendication principale.

Ces caractéristiques qui ne découlent pas de façon évidente du brevet US 4 221 463 ne sont également pas suggérées dans un autre document concernant des stations de détection utilisant des rayons laser. Par exemple la publication "Electronics and Communications in Japan, vol. 64-C, N° 7, 1981," H. Kimura, page 117-126 concerne une station utilisant un radar laser pour contrôler des polluants atmosphériques dans laquelle le laser est disposé dans un boîtier tournant et susceptible d'effectuer un mouvement de balayage. En plus du fait que les trajets optiques des faisceaux émis et rétro-diffusés sont différents, on constate que dans cette publication il n'est également pas question du problème de la visibilité atmosphérique qui constitue cependant le problème essentiel pour l'utilisation de la technique de télémétrie à laser pour la détection de fumées.

D'autres caractéristiques avantageuses de l'invention figurent dans les revendications dépendantes.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels:

- la figure 1 représente de façon schématique une station de détection selon la présente invention; et
- la figure 2 est un schéma bloc démontrant le fonctionnement d'une station et d'un système, proposés par l'invention.

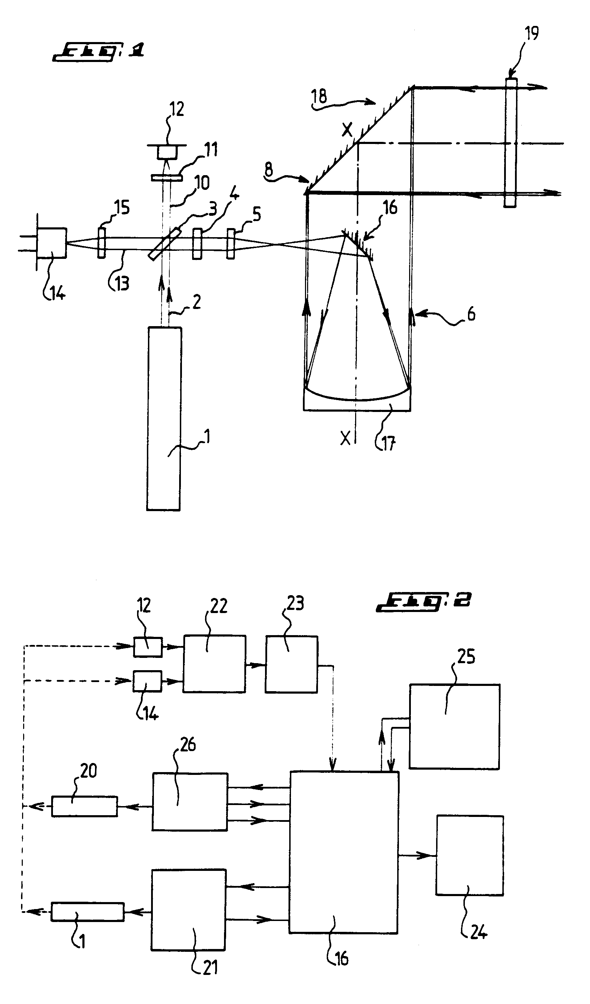

Une station ou un poste de détection proposé par l'invention, comprend, selon la figure 1, essentiellement une source 1 d'un faisceau laser 2, de diamètre relativement faible, et, dans le trajet de ce faisceau émis 2, un dispositif séparateur 3, tel qu'une lame séparatrice ou un cube séparateur à polarisation, un dispositif de variation de la polarisation 4, un dispositif optique 5, tel qu'une lentille de convergence, un télescope 6 et un ensemble optique 8 tournant autour d'un l'axe X-X et destiné à diriger le faisceau sortant pour que celui-ci balaye la zone à surveiller.

Comme cela est indiqué par des flèches, un faisceau rétro-diffusé par un obstacle se trouvant dans la trajectoire du faisceau émis et reçu par l'ensemble optique 8 parcourt le trajet optique, qui vient d'être décrit, de l'ensemble optique 8 au dispositif séparateur 3, mais dans le sens inverse de celle du faisceau émis 2.

Le dispositif séparateur est conçu pour séparer du faisceau émis 2, une faible partie de faisceau 10 qui parvient à travers une lentille de convergence 11 à un premier détecteur 12 et pour séparer du faisceau émis 2, le faisceau rétro-diffusé indiqué par le symbole de référence 13 qui est reçu par un deuxième détecteur 14, à travers une lentille de convergence 15. La station proposée par l'invention comprend en outre un dispositif de gestion locale 16 (figure 2) tel qu'un microprocesseur, qui a pour fonction de commander, organiser et piloter le fonctionnement de la station selon l'invention.

Le télescope 6 est essentiellement formé par un premier miroir plan de renvoi 16 situé dans la partie de faisceau divergent produit par la lentille de convergence 5 formant ainsi un dispositif de divergence de faisceau et un deuxième miroir 17 situé dans le faisceau divergent renvoyé par le miroir 16 et conformé pour faire converger le faisceau divergent reçu en un faisceau parallèle de relativement grand diamètre. Le miroir 16 est placé dans l'axe du miroir 17 et présente des dimensions relativement faibles par rapport au miroir 17. Le faisceau parallèle parvient à l'ensemble optique tournant 8. Celui-ci comprend essentiellement un miroir plan de renvoi 18 et un hublot de protection indiqué schématiquement en 19. L'ensemble tournant 8 est entraîné en rotation par un moteur pas-à-pas qui est indiqué en 20 sur le schéma de la figure 2 et commandé par un dispositif 26.

On décrira ci-après le fonctionnement d'une station selon l'invention, dans son utilisation dans un système de détection de fumée d'incendie tel que représenté schématiquement à la figure 2. A cette occasion, on indiquera également à titre d'exemple les critères et propriétés techniques essentielles de la station et du système qui doivent être observés ou choisis pour assurer un bon fonctionnement.

La source laser 1 émet un faisceau parallèle 2 de relativement faible diamètre. Ce faisceau est transformé en un faisceau de sortie parallèle présentant un diamètre relativement important, à l'aide de la lentille de convergence 5 et du jeu des deux miroirs 16 et 17. L'ensemble optique tournant 8 effectue un mouvement circulaire pas-à-pas pour que la zone tout autour de la station au-dessus des arbres soit balayée. Dans chaque position angulaire immobile, la source laser émet une ou plusieurs impulsions de faisceau, sous la commande du dispositif de gestion locale 16 qui envoie une commande de tir au dispositif d'alimentation de la source laser indiquée schématiquement en 21.

Le détecteur 12 qui reçoit une partie déterminée du faisceau laser 2 émis déclenche alors un chronomètre qui sera arrêté par le détecteur 14 lorsque celui-ci reçoit un écho sous forme d'un faisceau rétro-diffusé. La durée de temps mesurée par le chronomètre étant directement proportionnelle à la distance de la station, de l'obstacle ayant produit l'écho, cette distance peut être calculée. Les intensités de lumière reçue par les deux détecteurs 12 et 14 sont également mesurées. Ces différentes mesures sont exécutées par le dispositif indiqué schématiquement en 22. Les valeurs mesurées sont numérisées par un dispositif 23 et les données ainsi obtenues sont transmises à l'électronique du dispositif de gestion locale 16. Le flux des différents signaux est indiqué par des lignes fléchées.

Les données relatives à la lumière reçue par le détecteur 12, qui est dans un rapport déterminé et connu avec la puissance du faisceau émis 2, est prise en compte dans le dispositif de gestion centrale comme référence de fonctionnement de la source laser. Le dispositif central 16 peut ainsi contrôler cette source laser.

Les données relatives à la lumière rétro-diffusée reçues par le détecteur 14 sont également prises en compte dans le dispositif de gestion centrale 16. Ces données permettent, d'une part, de localiser un objet source d'un écho et, d'autre part, de connaître la visibilité atmosphérique. En effet, dans le dispositif de gestion centrale 16 sont répertoriés les objets stables tels que par exemple des chateaux d'eau ou pylônes. Leurs coordonnées de position dans le système polaire établie par le dispositif 16 ainsi que la puissance du faisceau émis 2 étant connues, la valeur de leur écho déterminée par le détecteur 14 donne une information sur la visibilité de l'atmosphère et permet d'obtenir des informations sur des obstacles non répertoriés, tels qu'une colonne de fumée.

Si un écho est détecté qui ne corresponde pas à la présence d'un obstacle ou d'une fumée répertoriée, l'intensité et la distance télémétrées sont prises en compte par le dispositif 16. Si la valeur de l'écho est importante, immédiatement sa position en coordonnées polaires et sa distance sont communiquées à un ordinateur central 24. Si l'intensité est faible, le dispositif 16 commande un ou plusieurs autres tirs sur le même obstacle, tout en maintenant la position angulaire du faisceau d'exploration, pour confirmer ou infirmer la présence d'une fumée. De cette manière, on peut également exclure la prise en compte d'objets transitoires dans le faisceau explorateur, tel que par exemple un oiseau.

Pour assurer le bon fonctionnement d'un système détecteur de fumée, selon l'invention, un certain nombre de critères et exigences doivent être pris en compte. Ainsi la longueur d'onde de la lumière émise par la source laser 1 doit être choisie selon plusieurs critères: l'atmosphère doit être transparente pour cette longueur d'onde. Celle-ci devrait se situer avantageusement dans le domaine invisible pour l'oeil humain pour éviter, surtour la nuit, des effets visuels nuisibles ou aveuglants. La longueur d'onde de la lumière émise doit être plus courte que la taille des particules contenues dans la fumée (vapeur d'eau et produits solides non brûlés). La durée des impulsions émises doit être courte pour permettre une télémétrie précise. On rappelle, que la lumière parcourt 30 cm dans un lapse de temps d'une nanoseconde ($10^{-9}$ s). En outre, il est très important de choisir le diamètre du faisceau émis pour que la densité de puissance lumineuse de ce faisceau soit inférieure au seuil de sécurité en l'usage, c'est-à-dire ne produit aucun effet nocif sur l'oeil humain.

A titre d'exemple, il est avantageux d'utiliser un laser du type à YAG-Néodyme émettant des impulsions d'une énergie comprise entre 10 et 300 millijoules à une longueur d'onde λ = 1,06 μ (proche de la lumière infrarouge), d'une durée de l'ordre de 10 nanosecondes et à une cadence de récurrence de 5 à 30 hertz.

Pour que la détection de fumée soit fiable, l'angle correspondant à un pas de l'ensemble optique tournant 8 doit être suffisamment faible, par exemple de 0,16° soit de 2,8 milliradians. Ainsi il y a 2250 positions analysées. L'ensemble optique tournant 8 effectue un tour complet d'horizon en 225 secondes. Avec un laser du type indiqué à titre d'exemple ci-avant, il est possible de détecter une fumée à une distance de 20 kilomètres.

Concernant l'ordinateur central il est à indiquer qu'il reçoit les informations des différentes stations d'observation. Il indique sur une imprimante ou sur un écran les informations utiles à l'utilisateur. Il affiche l'emplacement des fumées détectées sur un transparent placé sur une table traçante et allume sur la carte murale le carreau correspondant à l'emplacement du transparent. L'utilisateur en plaçant le transparent sur la carte détermine ainsi avec précision l'emplacement de la fumée.

Pour améliorer encore l'efficacité et la fiabilité du système selon l'invention, le dispositif d'alimentation 21 de la source laser 1 et le dispositif d'entraînement 26 du moteur 20 peuvent dialoguer avec le dispositif central 16, ce qui est indiqué par les lignes fléchées. Ainsi, le dispositif d'entraînement peut confirmer au dispositif 16 qu'un mouvement commandé par celui-ci a été effectué. Le dispositif d'alimentation 21 peut transmettre au dispositif 16 des informations relatives à son bon fonctionnement.

Il ressort des remarques précédentes qu'une station conçue selon la présente invention permet d'émettre un faisceau laser d'un diamètre important pouvant être choisi selon les exigences de l'utilisation de la station. Dans un système de détection de fumée, on choisira le diamètre pour que l'intensité lumineuse du faisceau ne soit pas gênante ou nuisible à l'oeil humain. De plus, un grand diamètre assure une grande détectivité du système optique récepteur. Le fait que selon l'invention le dispositif optique émetteur et le dispositif optique récepteur sont formés par un seul et même dispositif simplifie considérablement la structure de la station et la rend peu coûteuse et très fiable. Grâce à l'utilisation spécifique, qui a été décrite plus haut des détecteurs 12 et 14 et de la présence des répertoires des obstacles à ne pas retenir dans le dispositif de gestion locale, il est possible d'avoir de façon permanente une information sur le fonctionnement correct de la source laser, les conditions atmosphériques et la nature des obstacles formant sources d'échos. Pour améliorer encore le système, le dispositif de gestion locale 16 peut dialoguer avec l'ordinateur central et un poste indiqué en 25 qui permet d'entrer de nouvelles données dans le dispositif 16 ou confirmer certaines données produites par ce dispositif, en vue d'une mise à jour permanente par exemple du répertoire, et permettre des vérifications de la nature de certains échos non répertoriés mais devant tout de même ne pas exciter le déclenchement d'une alarme, telle que par exemple des fumées passagères devant être tolérées. En outre, la localisation d'une fumée peut être effectuée par une seule station..

## Revendications

1.  Station pour la détection par des rayons laser, d'une substance susceptible de rétro-diffuser au moins une partie de rayons laser incidents, du type comprenant une source laser (1) à émission de rayons laser, un détecteur (14) de l'énergie laser rétro-diffusée par ladite substance et reçus par la station, un agencement optique (3, 4, 5, 6) traversé inversement par les rayons émis par ladite source et par l'énergie rétro-diffusée reçue, et pourvu d'un dispositif séparateur (3) des rayons émis par ladite source (1) et de l'énergie rétro-diffusée destinée audit détecteur (14) et d'un dispositif optique (5, 6) d'élargissement des rayons émis par ladite source pour former un faisceau de plus grand diamètre devant être émis par la station et de réduction du diamètres des rayons d'énergie rétro-diffusée et reçue, caractérisée en ce que pour détecter et localiser notamment des fumées d'incendie de forêts dans une zone géographique pouvant avoir une étendue importante, telle qu'une zone d'un rayon de vingt kilomètres autour de la station, cette dernière comprend un ensemble optique tournant (6) monté rotatif dans le faisceau précité de plus grand diametre, et entraîné par un moteur pour effectuer un mouvement de balayage de la zone à surveiller, avec des arrêts dans des positions angulaires prédéterminées, que la source (1) émettrice de rayons laser est adaptée pour émettre des rayons laser sous forme d'impulsions récurrentes dont au moins une est tirée à chaque arrêt précité, qui ont une longueur d'onde faible par rapport à la taille des particules rétro-diffusantes contenues dans les fumées et qui sont invisibles et pour lesquels l'atmosphère présente une bonne transparence assurant ladite étendue importante de la zone à surveiller, et en ce que la station comprend un dispositif (22) adapté pour mesurer la distance d'une substance rétro-diffusante par détermination de la durée de temps écoulé entre l'émission des rayons et la réception de l'énergie rétro-diffusée par cette substance et un dispositif de gestion centrale (16), tel qu'un dispositif microprocesseur, qui comprend un répertoire des objets stables se trouvant de façon permanente dans la zone de balayage des rayons émis et est adapté pour déterminer la visibilité atmosphérique dans la zone de balayage et la nature de la substance rétro diffusante en utilisant comme référence l'énergie rétro-diffusée par les objects stables.

2. Station selon la revendication 1, caractérisée en ce que la source laser (1) est du type YAG-Néodyme émettant des impulsions d'énergie comprises entre 100 et 300 millijoules, à une longueur d'onde de l'ordre de $\lambda = 1,06$ $\mu$m pendant une durée de l'ordre de 10 nanosecondes.

3. Station selon l'une des revendications 1 ou 2, caractérisée en ce que l'ensemble optique tournant (6) est entraîné par un moteur pas à pas, l'angle correspondant à un pas est compris entre 0,16° et 2,8 milliradians, chaque pas correspondant à un arrêt précité.

4. Station selon l'une des revendications précédentes, caractérisée en ce que le dispositif d'élargissement et de réduction du diamètre du faisceau (5, 6) est adapté pour produire un faisceau dont le diamètre est élargi à une valeur d'intensité de faisceau, qui n'est pas nuisible à l'oeil humain.

5. Station selon l'une des revendications précédentes, caractérisée en ce que le dispositif d'élargissement et de réduction du diamètre du faisceau laser (5, 6) comprend un dispositif optique (5) transformant le faisceau parallèle de faible diamètre émis par la source laser (1) en un faisceau divergent et un télescope (6) adapté pour faire converger le faisceau divergent reçu du dispositif optique (5) en un faisceau parallèle de plus grand diamètre.

6. Station selon la revendication 5, caractérisée en ce que le télescope (6) comprend un premier miroir de renvoi (16) de dimensions relativement faibles situé dans la trajectoire du faisceau laser, en aval du dispositif optique de divergence (5), dans le sens d' émission, et un deuxième miroir (17) situé dans l'axe du faisceau renvoyé par le premier miroir (16) et adapté pour faire converger le faisceau divergent en un faisceau parallèle d'un diamètre relativement important.

7. Station selon l'une des revendications précédentes, caractérisée en ce que l'ensemble optique tournant comprend un miroir plan de renvoi (18) monté rotatif dans le faisceau de diamètre élargi.

## Claims

1. Station for the detection by means of laser rays of a substance likely to retrodiffuse at least a part of the incident laser rays, of the kind comprising a laser rays emitting laser source (1), a detector (14) of the laser energy retrodiffused by said substance and received by the station, an optical arrangement (3, 4, 5, 6) inversely traversed by the rays emitted by said source and by the received retrodiffused energy and provided with a separator device (3) for separating the rays emitted by said source (1) and the retrodiffused energy to be applied to said detector (14) and with an optical device (5, 6) for enlarging the rays emitted by said source in view to form a beam having a greater diameter to be emitted by the station and for reducing the diameter of the retrodiffused and received energy rays, characterized in that for detecting and locating particularly forest fire smokes in a geographical zone which may have an important extension, such as a zone having radius of twenty kilometers around the station, the latter comprises a rotating optical unity (6) mounted rotatively in the said greater diameter beam and driven by a motor for executing a movement for scanning the zone to be supervized, with stops in predetermined angular positions, in that the laser rays emitting source (1) is adapted to emit laser rays in form of recurrent pulses at least one of which is fired at each said stop and which have a wavelength which is small with respect to the size of the retrodiffusing particles included in the smokes and which are invisible and for which the atmosphere has a good transparence insuring the great extension of the zone to be supervized, and in that the station comprises a device (22) adapted to measure the distance of a retrodiffusing substance by determining the period of time elapsed between the emission of the rays and the reception of the energy retrodiffused by said substance and a central monitoring device (16) such as microprocessor device, which includes an index of stable objects permanently present in the zone scanned by the emitted rays and which is adapted to determine the atmospheric visibility in the scanned zone and the nature of the retrodiffusing substance by using as reference the energy retrodiffused by the stable objects.

2. Station according to claim 1, characterized in that the laser source (1) is of the YAG-Neodymium type emitting energy pulses ranging from 100 to 300 millijoules with a wavelength of about $\lambda$ = 1.06 $\mu$m for a duration of about 10 nanoseconds.

3. Station according to any of claims 1 or 2, characterized in that the rotating optical assembly (6) is driven by a step by step motor, the angle corresponding to a step being comprised between 0.16° and 2.8 milliradians, each step corresponding to a said stop.

4. Station according to any of foregoing claims, characterized in that the device for enlarging and reducing the diameter of the beam (5, 6) is adapted to produce a beam, the diameter of which is enlarged to a beam intensity value which is not harmful to the human eye.

5. Station according to any of the foregoing claims, characterized in that the device for enlarging and reducing the diameter of the laser beam (5, 6) comprises an optical device (5) for transforming the small diameter parallel beam emitted by the laser source (1) in a divergent beam and a telescope (6) adapted to collimate the divergent beam received from the optical device (5) in a parallel beam of larger diameter.

6. Station according to claim 5, characterized in that the telescope (6) comprises a first reflecting mirror (16) of relatively small size located in the path of travel of the laser beam, downstream of the optical devergent device in the direction of emission, and a second mirror (17) located in the axis of the beam reflected by said first mirror (16) and adapted to collimate the divergent beam in a parallel beam of a relatively great diameter.

7. Station according to any of the foregoing claims, characterized in that the rotating optical device comprises a plane reflecting mirror mounted rotatively within the enlarged diameter beam.

**Patentansprüche**

1. Einrichtung zur Erkennung mit Hilfe von Laserstrahlen einer Substanz, die in der Lage ist, wenigstens einen Teil der einfallenden Laserstrahlen zurückzustrahlen, mit einer Laserquelle (1) zur Aussendung von Laserstrahlen, einem Detektor (14) der von der genannten Substanz zurückgestrahlten und von der Anlage empfangenen Laserenergie, einer optischen Anordnung (3,4,5,6), die in umgekehrter Richtung von den von der genannten Quelle ausgesandten Strahlen und von der empfangenen zurückgestrahlten Energie durchlaufen wird und mit einer Vorrichtung (3) zur Trennung der von der genannten Quelle (1) ausgesandten Strahlen und der für den Detektor (14) bestimmten zurückgestrahlten Energie und mit einer optischen Vorrichtung (5,6) zur Erweiterung der von der genannten Quelle ausgesandten Strahlen zur Bildung eines Bündels grösseren Durchmessers, der von der Einrichtung ausgesandet wird, und zur Verringerung des Durchmessers der zurückgestrahlten und empfangenen Energiestrahlen versehen ist, dadurch gekennzeichnet, dass zur Erkennung und Lokalisierung insbesondere von Rauch, der von Waldbränden herstammt, in einer geographischen Zone, die eine grosse Ausdehnung haben kann, wie eine Zone mit einem Radius von 20 Kilometern um die Einrichtung herum, letztere eine sich drehende optische Einheit (6) besitzt, die drehbar in dem genannten Bündel grösseren Durchmessers vorgesehen ist und von einem Motor angetrieben wird, um eine die zu überwachende Zone abtastende Bewegung auszuführen, mit Stillständen in vorbestimmten Winkelstellungen, dass die die Laserstrahlen aussendende Quelle (1) geeignet ist, Laserstrahlen in Form von wiederkehrenden Impulsen auszusenden, von denen wenigstens einer bei jedem genannten Stillstand abgeschossen wird und die eine Wellenlänge besitzen, die im Vergleich zu der Grösse der zurückgestrahlten und in dem Rauch enthaltenen Teilchen gering ist, und die unsichtbar sind und für die die Atmosphäre eine gute Transparenz besitzt, die die grosse Ausdehnung der zu überwachenden Zone gewährleistet, und dadurch, dass die Einrichtung eine Vorrichtung (22) zur Messung der Entfernung einer zurückstrahlenden Substanz durch Bestimmung der Zeitdauer zwischen der Aussendung der Strahlen und dem Empfang der von dieser Substanz zurückgestrahlten Energie und eine zentrale Steuervorrichtung (16), wie eine Mikroprozessorvorrichtung, besitzt, die ein Verzeichnis feststehender Gegenstand besitzt, die sich ständig in der von den ausgesandeten Strahlen abgetasteten Zone befinden, und die in der Lage ist, die atmosphärische Sichtigkeit in der abgetastenen Zone und die Art der zurückstrahlenden Substanz zu bestimmen, unter Ausnutzung der von den feststehenden Gegenständen zurückgestrahlen Energie als Bezugsgrösse.

2. Einrichtung nach Anspruch 1, dadurch gekennzeichnet, dass die Laserquelle (1) eine YAG-Néodym Quelle ist, die Impulse mit einer Energie zwischen 100 und 300 Millijoules, bei einer Wellenlänge in der Grössenordnung von $\lambda$ = 1,06 $\mu$m während einer Zeitdauer in der Grössenordnung von 10 Nanosekunden aussendet.

3. Einrichtung nach einem der Ansprüche 1 oder 2, dadurch gekennzeichnet, dass die sich drehende optische Einheit (6) von einem Schrittmotor angetrieben wird, wobei der Winkel, der einem Schritt entspricht, zwischen 0,16° und 2,8 Millirad beträgt und jeder Schritt einem genannten Stillstand entspricht.

4. Einrichtung nach einem der vorangehenden Ansprüche, dadurch gekennzeichnet, dass die Vorrichtung zur Erweiterung und zur Verringerung des Durchmessers des Bündels (5,6) geeignet ist, um ein Bündel zu erzeugen, dessen Durchmesser auf einen Bündelintensitätswert erweitert ist, der nicht für das menschliche Auge schädlich ist.

5. Einrichtung nach einem der vorangehenden Ansprüche, dadurch gekennzeichnet, dass die Vorrichtung zur Erweiterung und zur Verringerung des Durchmessers des Laserbündels (5,6) eine optische Vorrichtung (5) besitzt, die das parallele Bündel geringen Durchmessers, das von der Laserquelle (1) ausgesendet wird, in ein divergierendes Bündel umformt, und ein Teleskope (6) aufweist, das geeignet ist, das von der optischen Vorrichtung (5) empfangene divergierende Bündel in ein paralleles Bundel grösseren Durchmessers zu konvergieren.

6. Einrichtung nach Anspruch 5, dadurch gekennzeichnet, dass das Teleskope (6) einen ersten Reflektorspiegel (16) mit verhältnismässig gerringen Ausmassen, der in dem Strahlengang des Laserbündels von der optischen divergierenden Vorrichtung (5) im Abstrahlungssinne abwärts angeordnet ist, und einen zweiten Spiegel (17) besitzt,der in der Achse des vom ersten Spiegel (16) zurückgeworfenen Bündels angeordnet ist und in der Lage ist, dass divergierende Bündel in ein Parallelbündel verhältnismässig grossen Durchmessers zu konvergieren.

7. Anlage nach einem der vorangehenden Ansprüche, dadurch gekennzeichnet, dass die sich drehende optische Einheit einen reflektierenden Planspiegel (18) besitzt, der drehbar in dem Bündel erweiterten Durchmessers angeordnet ist.

Fig. 1

Fig. 2